(19) Europäisches Patentamt
European Patent Office
Office européen des brevets

(11) **EP 2 413 281 A1**

(12) **EUROPEAN PATENT APPLICATION**

(43) Date of publication:
**01.02.2012 Bulletin 2012/05**

(51) Int Cl.:
***G06Q 50/00*** (2012.01)

(21) Application number: **11006178.5**

(22) Date of filing: **27.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.07.2010 US 847420**

(71) Applicant: **Accenture Global Services Limited Dublin 4 (IE)**

(72) Inventors:
• **Cheewakriengkrai, Arinee**
 **Bangrak Bangkok 10500 (TH)**
• **Juganda, Engkun Wahjudi**
 **Jakarta, 11630 (ID)**
• **Budiarso, Kemang**
 **Kemang Pratama, 17116 (ID)**

(74) Representative: **Müller-Boré & Partner Patentanwälte**
 **Grafinger Straße 2**
 **81671 München (DE)**

(54) **Monitoring and evaluating the production of a conversion facility**

(57) The disclosure provides a system and method for monitoring and/or evaluating a conversion facility. The method includes storing values for quantitative variables and/or cost variables associated with processes performed at the conversion facility. The method includes receives a syncing frame, wherein the syncing frame embraces values for the quantitative variables and/or the cost variables stored less than thirty days prior to receiving the syncing time frame. The method includes determining, from the stored values for at least one set of values for at least one of the variables that are within the syncing frame. The method also includes calculating a cost of processing a commodity processed at the conversion facility for the syncing frame using the first and second set of values.

Conversion Facility Production (CFP) System
100

FIG. 1

EP 2 413 281 A1

**Description**

BACKGROUND

A conversion facility can be any factory or industrial complex which converts a raw material commodity in the manufacture of a finished good commodity through conversion processing. Generally, the input of a conversion facility may be referred to as a raw material or a raw material commodity. And the output of a conversion facility may be referred to as either a finished good or a finished good commodity. A conversion facility may also produce one or more intermediates. An intermediate is any partially processed commodity that is not a finished good commodity.

The three general stages in any conversion facility are the raw materials stage, the work-in-process stage and the finished goods stage. The raw materials stage includes the intake and storage of raw materials at a conversion facility and the finished goods stage includes the intake and storage of finished goods after processing at a conversion facility. Between the raw materials stage and the finished goods stage is the work-in-process stage in which conversion processing occurs to raw materials and to any intermediates. It is also in the work-in-process stage that intermediates are stored.

A conversion facility includes at least one processing subunit for converting some raw material commodity into a finished good commodity. A processing subunit may include equipment for transporting materials and/or equipment for performing one or more process steps in the conversion that is performed at a conversion facility. A conversion facility as a whole, and at the level of the individual processing subunits at the conversion facility, can be run on either a continuous or batch type basis, or some combination of both.

If a conversion facility has only a single processing subunit, then that individual processing subunit within that conversion facility produces a finished good. If a conversion facility has more than one processing subunit, then an individual processing subunit within that conversion facility may produce either an intermediate or a finished good.

A conversion facility, as a general matter, includes several inventory areas for storing the intake of raw materials, as well as the production of intermediates and finished goods. If the finished good commodity is collected in an inventory, this is called a finished goods inventory. Similarly, raw materials collected prior to processing are held in what are called raw material inventories. Also, an inventory for an intermediate product, one that is unfinished and needs further processing, is called an intermediate inventory or a work-in-process inventory.

One example of a conversion facility is an oil refinery. Crude oil is a typical raw material commodity that is processed and refined into finished goods that are petroleum products, such as gasoline, diesel fuel, asphalt, heating oil, kerosene, and certain gas products. An oil refinery is a large industrial complex with extensive piping running throughout carrying streams of material between large distillation processing subunits.

Another example of a conversion facility is a chemical plant. In many ways, a chemical plant uses much of the same technology and equipment as an oil refinery. A chemical plant commonly has large vessels or sections that are the processing subunits. These are interconnected by pipes or other transport equipment that carry streams of material. Material streams can be a fluid that is either gaseous or liquid. Material streams may also be solids, or mixtures of fluids and solids, such as slurries.

The conversion processing in chemical plants, oil refineries or any other type of conversion facility is commonly made up of steps called subunit operations which occur in the individual processing subunits of a conversion facility. Collectively, all the subunit operations at a conversion facility are the operations of that conversion facility, while the output of finished goods or intermediates is known as the production of a conversion facility, or a processing subunit.

A typical commodity can be any type of bulk good. It may be a raw material when taken into a conversion facility as a feedstock which is converted there to a finished good commodity. As a feedstock, the commodity may progress through many processing subunits and be combined with feedstocks of other raw materials or intermediates before being fully converted into a finished good commodity. The output of one processing subunit that is used as a feedstock to another processing subunit is generally an intermediate, unless part of that output is sold without any further conversion processing. In that instance, the part of the output that is sold is a finished good. An example of this occurs in an oil refinery, when slop containing asphalt is removed from a distillation processing subunit. The asphalt/slop may be sold, as is, as a finished good, or it may be used or combined as an intermediate with other materials to make a different finished good. Also, a finished good commodity of one conversion facility may be a raw material commodity for another conversion facility. For example, the finished goods from an oil refinery may be used as a raw material feedstock in a chemical plant.

Oil refineries and chemical plants represent only a subset of all the different types of conversion facilities. Other types of conversion facilities are for manufacturing finished goods such as polymers, pharmaceuticals, foods, beverages, wood products and the like. In addition, conversion facilities for generating electric power and recycling waste are examples of still other types of conversion facilities. For instance, a fuel such as coal can be a raw material in a conversion facility for generating electric power, while electric power is the corresponding finished good commodity.

The ongoing production and operations at a conversion facility includes the movements of materials through different locations in the facility. The costs associated with these materials must be accounted for. In addition, the movement of the materials also needs to be tracked as the material transfers results in the movement of the materials through the different inventories and processing sub-units throughout the conversion facility. But it has not always been practical or possible to account for the costs that are associated, directly or indirectly, with any specific movement of material, from one physical location to the next, as in any of the material transfers which may be involved with a specific movement of material.

However, despite the need for accurate and timely information regarding any current month, or at mid-month, regarding operations, production and costs, conversion facilities operate such that this information is only available from the month end close of accounting to the next month end. As such, information regarding operations, production and costing at a conversion facility is not available during the current month or at mid-month. The management of a conversion facility must wait until the end of any current month before accurate information becomes available regarding that month's operations, production and costs at a conversion facility. For example, the electricity costs in any month generally are not known each day, but instead are usually only available at the end of the month. So the management of a conversion facility cannot respond well and make adjustments during any current month or at mid-month, even when significant external circumstances might necessitate adjustments to operations and production at the conversion facility.

BRIEF SUMMARY OF THE INVENTION

The disclosure presents, in one embodiment, system configured to generate conversion facility production data utilizing quantitative variables and cost variables and utilizing one or more modules describing relationships between the variables. In the system, the modules further describe the relationships if the variables are modified to include the variables in a received syncing frame. The system includes a data storage device storing measured values for quantitative variables describing quantitative aspects of the conversion facility, wherein the quantitative variables are received from a plurality of sources associated with conversion processes performed at the conversion facility, determined values for cost variables describing cost aspects of the conversion facility, wherein the cost variables are received from a plurality of sources associated with conversion processes performed at the conversion facility, and a syncing frame, wherein the syncing frame embraces measured values for the quantitative variables and determined values for the cost variables stored less than thirty days prior to receiving the syncing time frame. The system includes a processor receiving a request for a first set of values, determined from the stored values for the quantitative variables, for at least one of the quantitative variables that are within the syncing frame, and a second set of values, determined from the stored values for the cost variables, for at least one of the cost variables that are within the syncing frame. The processor calculates a cost of processing a commodity processed at the conversion facility for the syncing frame using the first and second set of values.

Another embodiment is a method for monitoring and evaluating a conversion facility. The method includes storing measured values for quantitative variables describing quantitative aspects of the conversion facility, wherein the quantitative variables are received from a plurality of sources associated with conversion processes performed at the conversion facility. The method also includes storing values for cost variables describing cost aspects of the conversion facility, wherein the cost variables are received from a plurality of sources associated with conversion processes performed at the conversion facility. The method also includes receiving a syncing frame identifying a time period less than thirty days from prior to receiving the syncing time frame, and determining, from the stored measured values for the quantitative variables, a first set of values for at least one of the quantitative variables that are within the syncing frame. The method also includes determining, from the stored values for the cost variables, a second set of values for at least one of the cost variables that are within the synching frame, and calculating a cost of processing a commodity processed at the conversion facility for the syncing frame using the first and second set of values.

Another embodiment is a computer readable medium including instructions executable on at least one processor for storing measured values for quantitative variables describing quantitative aspects of the conversion facility, wherein the quantitative variables are received from a plurality of sources associated with conversion processes performed at the conversion facility. The method also includes storing values for cost variables describing cost aspects of the conversion facility, wherein the cost variables are received from a plurality of sources associated with conversion processes performed at the conversion facility. The method also includes receiving a syncing frame identifying a time period less than thirty days from prior to receiving the syncing time frame. The method also includes determining, from the stored measured values for the quantitative variables, a first set of values for at least one of the quantitative variables that are within the syncing frame. The method also includes determining, from the stored values for the cost variables, a second set of values for at least one of the cost variables that are within the synching frame, and calculating a cost of processing a commodity processed at the conversion facility for the syncing frame using the first and second set of values.

Another embodiment is a system configured to generate a conversion facility production data utilizing quantitative or cost variables and utilizing one or more modules describing relationships between the variables, wherein the modules further describe the relationships if the variables are modified to include the variables in a received syncing frame, the system including a data storage device storing information related to measured values for quantitative variables describing quantitative aspects or determined values for cost variables describing cost aspects of the conversion facility and received from a plurality of sources associated with conversion processes performed at the conversion facility and, a syncing frame identifying a time period less than thirty days from prior to receiving the syncing time frame, receiving a request for a set of values, determined from the stored values for the quantitative or cost variables, for at least one of the quantitative or cost variables that are within the syncing frame and the processor calculates a value of an actuator signal using the set of values embraced by the syncing frame, for sending to an actuator for controlling the processing of a commodity processed at the conversion facility, or further including an actuator controller and/or an actuator.

Another embodiment is a method for monitoring and evaluating a conversion facility, the method including storing measured values for quantitative variables describing quantitative aspects of the conversion facility or determined values for cost variables describing cost aspects of the conversion facility and received from a plurality of sources associated with conversion processes performed at the conversion facility, receiving a syncing frame, wherein the syncing frame embraces measured values for the quantitative variables or determined values for the cost variables stored less than thirty days prior to receiving the syncing time frame, determining, from the stored values for the quantitative variables or, from the stored values for the cost variables, a set of values for at least one of the quantitative variables or cost variables that are within the syncing frame and calculating a value of an actuator signal, using the set of values embraced by the syncing frame, for sending to an actuator for controlling the processing of a commodity processed at the conversion facility.

Other embodiments are a method wherein the actuator is configured to control a nonreactive material transfer or a reactive material transfer through a processing subunit, and the quantitative variables include an input mass, an output mass, and an accumulation mass.

BRIEF DESCRIPTION OF DRAWINGS

Embodiments are described in detail in the following description with reference to the following figures.

Figure 1 illustrates a system, according to an embodiment;

Figure 2 illustrates a data flow diagram, according to an embodiment;

Figure 3 illustrates a process flowchart demonstrating wood commodity conversion at a conversion facility, according to an embodiment;

Figure 4A illustrates a process flowchart demonstrating oil commodity conversion at a conversion facility, according to an embodiment;

Figure 4B illustrates an organizational structure by virtual storage location demonstrating the virtual movement of physical materials and financial information in oil commodity conversion at a conversion facility, according to an embodiment;

Figure 5 illustrates an example of a mass balancing at processing subunit within a conversion facility, according to an embodiment;

Figure 6 illustrates an example of a calculation of the cost of goods manufactured at a conversion facility, according to an embodiment;

Figure 7 illustrates a method for generating and storing data regarding the cost of goods manufactured at a conversion facility, according to an embodiment;

Figure 8 illustrates a method for generating and storing data regarding material transfers and mass balancing at a conversion facility, according to an embodiment;

Figure 9 illustrates a method for monitoring and evaluating a conversion facility, according to an embodiment; and

Figure 10 illustrates a computer system configured to provide a hardware platform for the system shown in figure 1, according to an embodiment.

DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It is apparent however, to one of ordinary skill in the art, that the embodiments may be practiced without limitation to these specific details. In some instances, well known methods and structures have not been described in detail so as not to unnecessarily obscure the embodiments. Furthermore, different embodiments are described below. The embodiments may be used or performed together in different combinations.

1. System

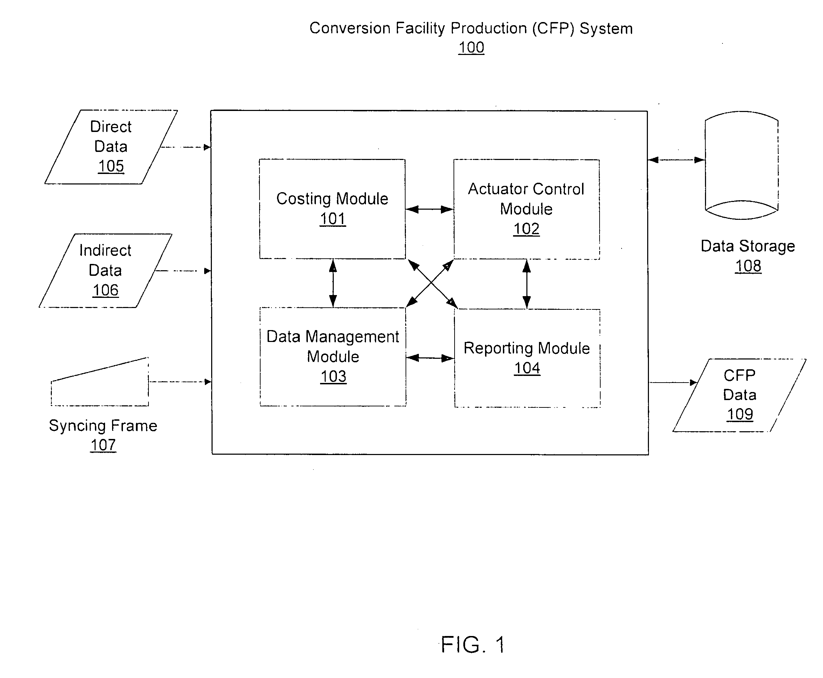

Figure 1 illustrates a conversion facility production (CFP) system 100, according to an embodiment. The CFP system 100 includes a data storage 108, a costing module 101, an actuator control module 102, a data management module 103, and a reporting module 104. The CFP system 100 receives direct data 105, indirect data 106 and a syncing frame 107 which are processed in various ways as described below in more detail to produce CFP data 109. The data storage 108 includes a data storage device that stores data organized in a manner that allows easy retrieval of the desired data. For example, the data storage 108 may include a relational database, or be part of an online analytical processing (OLAP) system for retrieving data, or include another type of platform providing similar functionality.

Data entering the CFP system 100 may be divided into two general categories, direct data 105 and indirect data 106. This division is similar to the corresponding division between direct and indirect data found in generally accepted accounting principles (GAAP) for cost accounting in manufacturing. In GAAP methodology, materials, labor, costs and overhead are generally divided into categories as either being direct or indirect, depending on how the information is related to a unit being manufactured.

Direct data 105 and indirect data 106 for the CFP system 100 may be collected from all sources on a continuous or periodic basis and processed at regular intervals by the CFP system 100. The length of these intervals can be set to less than a month, such as once a week, once a day, hourly or even shorter periods of time. Accordingly, a significant capability of the CFP system 100, according to one embodiment, is to generate CFP data 109 in the form of reports (messages, notifications, mass balance changes) and calculations (cost of processing, cost of goods manufactured) based on current month or mid-month data related to the monitoring and evaluation of the operations and production at a conversion facility. By providing current month reporting and feedback regarding operations and production, the activities and production at the conversion facility can be better aligned and integrated with operations of a corporation as a whole.

Current month reporting not only enables current month comparisons of actual activity with corporate goals, it also enables current month adjustments and changes to make at a conversion facility in response to the external changes. These external changes may be sharp fluctuations in the price of raw material or finished good commodities. Another is a sudden change to the overall production capacity within a corporation due to an unforeseen circumstance affecting another off-site conversion facility which is separate from the specific conversion facility being monitored and evaluated by the CFP system 100.

In general, direct data 105 and indirect data 106 can both involve data relating to values associated with materials, labor, costs and overhead. But direct data 105 is distinguishable from indirect data 106 based on the particular source for direct data 105 being a source that is directly associated with a commodity being processed. An example is an oil refinery, where the measured cost or volume of a batch of raw material crude oil is a direct cost and measure that is associated with any finished goods produced from that batch of raw material crude oil. By contrast, the labor costs associated with performing general maintenance throughout the oil refinery, in general, cannot be directly associated with any specific finished goods that are produced during a time period at the oil refinery. The labor cost for general maintenance may be apportioned among all of finished goods that are produced during a time period at the oil refinery through an indirect apportionment process. So the labor costs associated with performing general maintenance may be a source of indirect data 106 for a finished good commodity.

The direct data 105 and indirect data 106 both include values relating to cost aspects or qualitative aspects associated with the conversion processing of a commodity at a conversion facility. The timing at which these aspects are measured or determined can be done at regular or irregular intervals which are independent of each other, or can be measured or determined in unison on the same time cycle. These measured or determined values are received as direct data 105 or indirect data 106 at the CFP system 100 and can be stored in the data storage 108 as sets of data associated with cost aspects and/or qualitative aspects associated with the conversion processing of a commodity at a conversion facility.

Qualitative aspects of a conversion facility can include any type of measurable quantity associated with operations or production at the conversion facility, that is not a measurable cost. Qualitative aspects include such things as inventories, mass balances, measures of temperature or energy. Examples include an initial intake of material or energy from a source external to the conversion facility; an intermediate intake of material or energy from an inventory associated with the conversion facility; a measurement of a change in an energy balance from an energy transfer at the conversion facility; and an inventory measurement of an inventory directly associated with the conversion facility. Cost aspects of a conversion facility can include any type of measurable cost associated with operations or production at the conversion facility. An example can be any expenditure directly or indirectly associated with the operations of the conversion facility, such as a cost of a batch of raw materials, or an overhead cost associated with maintenance on a specific processing subunit.

Quantitative variables associated with quantitative aspects are symbolic identifiers associated with the measured values for quantitative aspects and whose associated value may be changed. Such as inventory measure at a point in time. Quantitative variables can also be a calculation based on a set of stored values associated with quantitative aspects. Such as the change in an inventory measure over a period of time, such as a syncing frame. Cost variables associated with cost aspects are symbolic identifiers associated with the determined values for cost aspects and whose associated value may be changed. Such as the cost of raw materials in an inventory determined at a point in time. Cost variables can also be a calculation based on a set of stored values associated with cost aspects. Such as the cost associated with a change in an inventory measure of raw materials over a period of time, such as a syncing frame.

The syncing frame 107 is a period of time that can be used for establishing a basis for comparison among the sets of data associated with the different cost aspects and/or qualitative aspects associated with the conversion processing of a commodity at a conversion facility. The length of period of time within a syncing frame (i.e., the period of time embraced by the syncing frame) is not limited and can have a length that is more than a month, less than a month, less than a week, less than a day or less than an hour.

As noted above, the CFP system 100 includes a costing module 101. One operation of the costing module 101 is to perform a cost of processing a commodity operation. In this operation, the costing module 101 receives (1) a syncing frame 107, (2) a first set of values embraced by the syncing frame 107 for at least one quantitative variable describing a quantitative aspect of processing the commodity, and (3) a second set of values embraced by the syncing frame 107 describing a cost aspect of processing the commodity. The costing module 101 then calculates a cost of processing a commodity using the syncing frame 107 and the two sets of stored values to produce CFP data 109 relating to the calculated cost of processing a commodity. The costing module 101 can also perform much more advanced operations involving multiple sets of data in different syncing frames. For instance, a cost of goods manufactured calculation can involve multiple sets of values collected as both direct data 105 and indirect data 106 and stored in the data storage 108. The cost of goods manufactured operation performed in the costing module 101 is described in greater detail below.

The CFP system 100 also has an actuator control module 102 for developing CFP data 109 that serves as a signal to an actuator in a conversion facility. The actuator control module 102 can be involved in several types of functions relating to the operations and production at a conversion facility. The actuator control module 102, in general, includes stored values regarding conditions relating to specific aspects that are associated with an actuator at a conversion facility. The actuator control module 102 can also include stored time periods corresponding to potential syncing frames for any of the specific aspects associated with an actuator at a conversion facility.

One function of the actuator control module 102 is to continuously monitor the direct data 105 for sets of values relating to any specific aspect at a conversion facility, which can be a quantitative aspect or a cost aspect. If a value or values for the quantitative or cost variables is within the syncing frame 107 meets or exceeds a stored value or condition relating to the specific aspect at a conversion facility, the actuator control module can send a signal as CFP data 109 outside the CFP system 100 that will ultimately affect an actuator, described in more detail below, relating to the specific aspect at a conversion facility. Thus, the actuator control module 102 may control actuators in the conversion facility to manipulate processes performed in the conversion facility based on computation performed using the quantitative or cost variables. The actuators may be controlled directly or indirectly by the CFP system 100. For example, the CFP system 100 may generate an instruction to be sent to an actuator or to a controller controlling the actuator.

The CFP system 100 also has a data management module 103 that can interface with the data storage 108 to store and retrieve data, or send data stored in data storage 108 to a data archive (not shown). The reporting module 104 generates reports, notifications, analyses, etc. as CFP data 109. These two modules are described in more detail below.

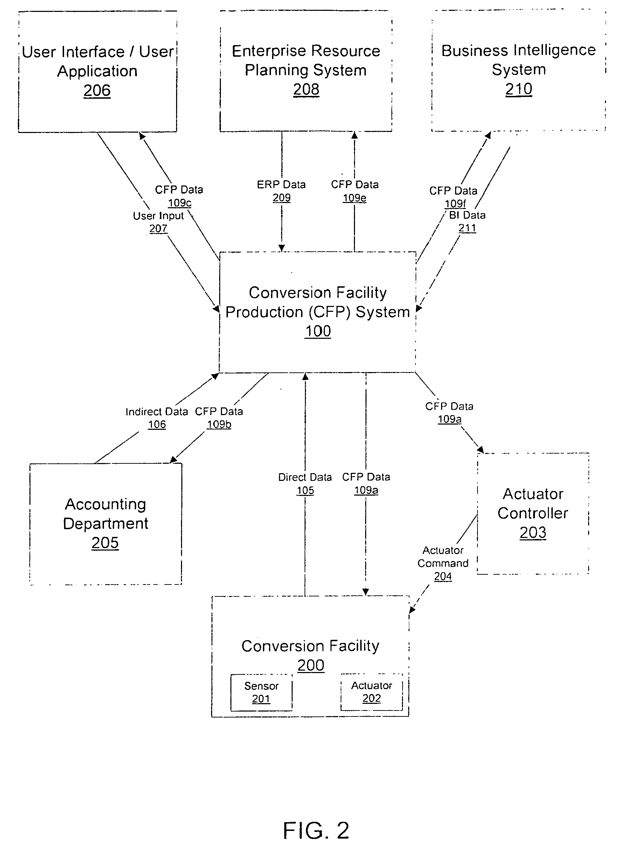

Figure 2 illustrates a data flow including a conversion facility production (CFP) system 100, according to an embodiment. Data sources for the CFP system 100 can include direct data 105 and indirect data 106, also shown in figure 1. According to the embodiment shown, direct data 105 comes from a conversion facility 200 containing a sensor 201, which can represent many sensors that gather direct data 105 relating to quantitative aspects or cost aspects of processing commodities at the conversion facility 200. Indirect data 106, according to the embodiment, comes to the CFP system 100 from an accounting department 205 that is associated with the conversion facility 200.

Direct data 105 is collected from sources directly associated with the materials used and the processing of commodities at the conversion facility 200. A sensor 201 may be used to measure a broad range of quantitative aspects, such a flow of material in a pipe, accumulation in a distillation chamber, fuel used as an indirect material to heat a distillation chamber, etc.

Although much of this data may be collected at the conversion facility 200 through sensor 201, the CFP system may also accept direct data 105 not collected through a sensor 201, and from sources (not shown) not located at the conversion facility 200. Any source providing data relating to direct materials, direct labor or some other quantitative or cost measure directly associated with a raw material commodity that is converted, or an intermediate or a finished good commodity produced at the conversion facility 200 can be a source of direct data 105. For purposes of comparison, overhead costs generally are not direct costs, but are usually indirect costs.

Direct data 105 includes cost data as well as quantitative measure data. This may include the purchase price (i.e., cost data) or the weight or volume (i.e., quantitative data) associated with a raw material commodity at initial intake at the conversion facility 200. Another source of direct data 105 can be the data associated with a raw material commodity held in a beginning inventory that is converted at some later time at the conversion facility 200.

Other direct data sources include inventories associated with work-in-process at the conversion facility 200 (i.e., intermediates of partially processed commodity materials) or fully processed materials which are finished good commodities produced at the conversion facility 200 (i.e., fully converted commodities).

Direct data 105 may also be related to transfers of materials and mass balances within individual processing subunits, and can be gathered through sensors 201 associated with the processing subunits within the conversion facility 200. A more detailed explanation of sensors and actuators as these operate in an individual processing subunit is provided below. Mass balances and material transfers are quantitative measures of the flow of solids and fluids through processing subunits for conversion processing at the facility. Direct data 105 relating to these material transfers generally originates from sources within the conversion facility 200. Data relating to material transfers and mass balances at individual processing subunits is useful for managing operations at the conversion facility 200, particularly when operating decisions must be made in the short-term or in response to an abrupt change in some circumstance requiring a modification to planned operations at the conversion facility 200.

Operations and production within the conversion facility 200 can also be managed through one or more actuators 202 within the conversion facility 200. The actuators 202 may be mechanical actuators, such as material flow control devices or for such things as sealing or opening material storage units. Actuators may be used for various other purposes throughout a conversion facility. An actuator may be associated with a sensor and may be controlled based on values measured by the associated sensor. For example, an actuator may be a valve and an associated sensor may be a flow sensor. A more detailed explanation of sensors and actuators as these operate in an individual processing subunit is provided below.

The activity of an actuator 202 is initiated or modified through CFP data 109a generated by the actuator control module 102 within the CFP system 100. The actuator control module 102, as described above, generates a CFP data 109a that is sent from the CFP system 100 as a signal, which may be sent directly to an actuator 202 in conversion facility 200 as an actuator command (shown as CFP data 109a), or in the alternative it may be sent an actuator controller 203. Based upon the CFP data 109a received, the actuator controller 203 generates an actuator command 204 that is sent to an actuator 202 inside the conversion facility 200. An actuator command 204 is an instruction for the actuator 202 to implement a change to some quantitative aspect associated with processing a commodity in the conversion facility 200. This pathway from the CFP system 100 to the actuator 202 in the conversion facility 200 is particularly useful in implementing automated pre-planned operating decisions for pre-determined conditions. These automated operating decisions can enhance the efficiency of operations and the profitability associated with the production at the conversion facility 200.

As shown in figure 2, a typical source for indirect data 106 to the CFP system 100 is the accounting department 205. The accounting department 205 assigns an apportionment of indirect costs, such as overhead, which is assigned to aspects associated with the processing of commodities at the conversion facility 200. In return, the accounting department receives CFP data 109b from reporting module 104 in the CFP system 100. The CFP data 109b is used at the accounting department 205 to improve the estimates as to how to apportion indirect costs among the finished good commodities produced at the conversion facility 200.

After direct data 105 and indirect data 106 are collected at periodic intervals to form data sets, the data management module 103, can be used to compare the different data sets within a chosen time frame (i.e., a syncing frame) or compare them with other data also measured in the same syncing frame developed through the CFP system 100, or from other sources from within a corporate network, such user input data 207 from a user interface 206, enterprise resource planning (ERP) data 209 from ERP system 208, or business intelligence (BI) data 211 from a BI system 210.

The user application 206 may include a dashboard allowing users to interact with the CFP system 100. Users may view CFP data 109c sent, from both the reporting module 104 and the data management module 103, in the form of reports or messages, view data and analytics results. Users may also provide user input 207 to the CFP system 100 via the user interface for the user application 206. The user interface 206 may be provided through a web interface or through a some other graphical user interface.

The ERP system 208 can be any system for managing internal and external corporate resources including tangible assets, financial resources, materials, human resources. The ERP system 208 can utilize CFP data 109e for obtaining updated current month calculations of inventories held at the conversion facility 200. The ERP system 208 may also send requests in the form of ERP data 209 for information or to ship a raw material from the conversion facility 200 when there is a shortage of that raw material in the company outside of the conversion facility 200 of that raw material commodity held at the conversion facility 200.

The BI system 210 can be any general system used in analyzing business data, such as sales revenue by products and/or departments or associated costs and incomes through analysis of historical, current, and predictive views of business operations. Common functions of conventional BI systems are reporting, online analytical processing, analytics, data mining, business performance management, benchmarking, data mining and predictive analytics. The BI system 210 can utilize CFP data 109f for obtaining updated current month calculations of costs associated with production and operations at the conversion facility 200. The BI system 210 may also send requests in the form of BI data 211 for information on current month costs or with instructions to implemented by management at the conversion facility 200 based on current month CFP data 109f sent to the BI system 210.

2. Examples of Conversion Processing at Conversion Facilities

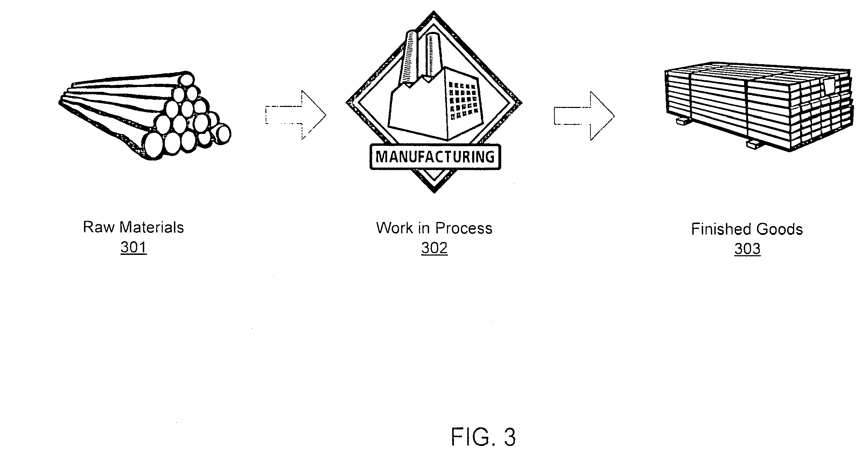

Figure 3 shows a wood commodity conversion facility as an example of a commodity conversion facility. Referring to Figure 3, raw materials 301, work-in-process 302 and finished goods 303 are delineated as the three major phases of a typical commodity conversion. As noted above, these three phases correspond to the three major stages in cost accounting for a conversion facility.

In the wood commodity conversion facility shown in figure 3, cut logs from trees are the intake raw materials 301. Data relating to cost and volume is collected at intake or from a beginning inventory at the facility. The raw material logs 301 are processed on a batch basis through the work-in-process stage 302 where the logs are cut at least once, but may be subject to several cutting steps as well as wood treating steps.

Direct data and indirect data are collected while the wood logs are undergoing conversion through the work-in-process stage 302, and data regarding any temporary or intermediate storage of the partially processed wood may reflect the cost and volume of the inventories located in work-in-process 302. After the last cutting or treatment step in work-in-process 302 has been completed, the data regarding the cost and volume of the cut lumber is collected representing the inventory in finished goods 303 for delivery or shipment.

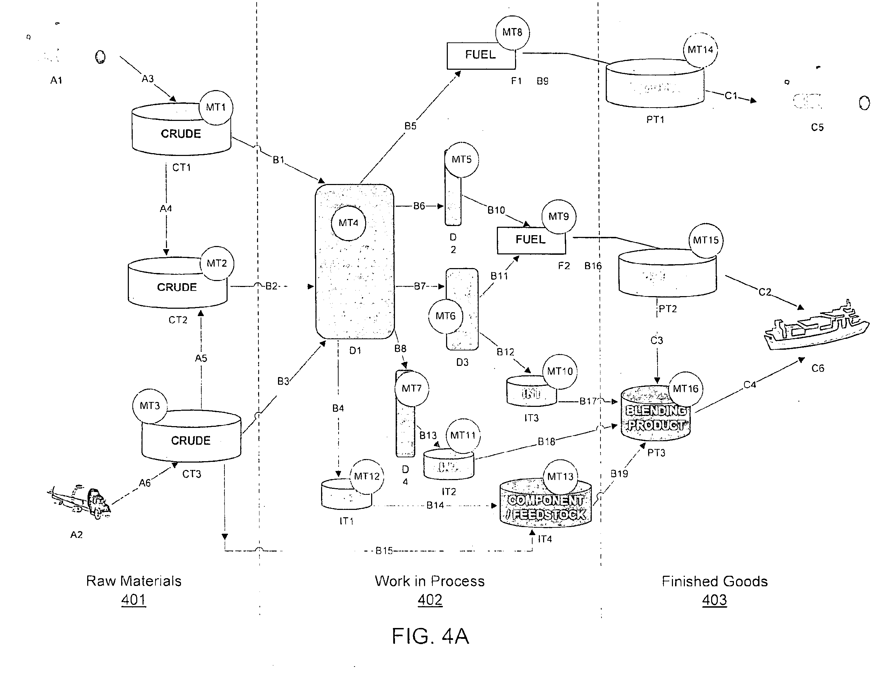

Figure 4A shows an oil refinery as another example of a commodity conversion facility. It is similar to a wood conversion facility in that the oil refinery, as a whole, can be divided into three general stages: raw materials 401, work-in-process 402, and finished goods 403. In order to maximize efficiency, an oil refinery is run on a continuous basis, and preferably is run constantly with downtime taken only for processing modifications or for scheduled maintenance.

The transport elements A1 through A6 and storage elements CT1 through CT3 all appear in the raw materials stage 401. Intake of crude oil to the refinery can be from various sources such as shown by pipeline A1 or truck delivery A2. The raw material crude oil is held in beginning inventories such as those shown CT1, CT2 and CT3. Leaving the raw materials phase 401, the crude oil from CT1, CT2 and CT3 is sent through feed lines B1, B2 and B3 to a primary initial distillation processing unit D1. The material transfers occurring at CTI, CT2 and CT3 are represented by MT1, MT2 and MT3, respectively.

Distillation chamber D1 is located within the work-in-process stage 402, along with the distillation units D2, D3 and D4, intermediate storage units IT1 - IT3, transport elements B1-B19, and fuel formation processing subunits F1 and F2. The distillation chamber D1 is a processing subunit that might be a simple chamber for non-reactive separation process, or some additive might be added at D1 to provoke a reactive process.

All the outgoing lines from processing subunit D1 carry intermediates. Line B5 carries unfinished fuel as an intermediate to fuel formation processing subunit F1 and subsequently, via line B9, to finished good product tank P1 as a finished goods inventory. B6, B7 and B8 are all lines outgoing from initial distillation processing subunit D1 to secondary distillation processing subunits D2, D3 and D4. Also outgoing line B4 from D1 carries asphalt or slop as a remainder from a distillation or reaction in D1. The remainder is held in an intermediate tank IT1 as a work-in-process inventory. The asphalt or slop held in IT1 is then transferred, via line B14, to IT4 where it is combined with crude oil from raw material inventory CT3. IT4 is an intermediate tank, which is also a work-in-process inventory.

Secondary distillation processing subunits D2, D3 and D4, may each be either reactive processing subunits or non-reactive processing subunits. D2, D3 and D4 all have at least one outgoing line that leads to F2, a tank for holding and processing an intermediate unfinished fuel, or intermediate holding tanks IT2 or IT3. These holding tanks are work-in-process inventories, but may also be considered non-reactive processing units. This distinction is for purposes of determining mass balancing in the work-in-process stage 402. The material transfers occurring at D1, D2, D3, D4, F1, F2, IT3, IT2, IT1 and IT4 are represented by MT4 through MT13, respectively.

The finished goods stage 403 is the location for transport elements C1 through C6 as well as finished good product tanks PT1 through PT3. Finished good product tank PT3 holds a blended product of asphalt, other intermediates and some part of the finished good fuel from finished goods inventory PT2 because PT3 receives feed lines from intermediate tanks IT2, IT3, and IT4 as well as from finished good product tank PT2. In this circumstance, the material held in PT2 and sent out through line C3 is an intermediate product for the finished good blending product in PT3. At the same time, the material held in PT2 but transported out through line C2 is a finished good. The material transfers occurring at PT1, PT2, and PT3 are represented by MT14, MT15 and MT16, respectively.

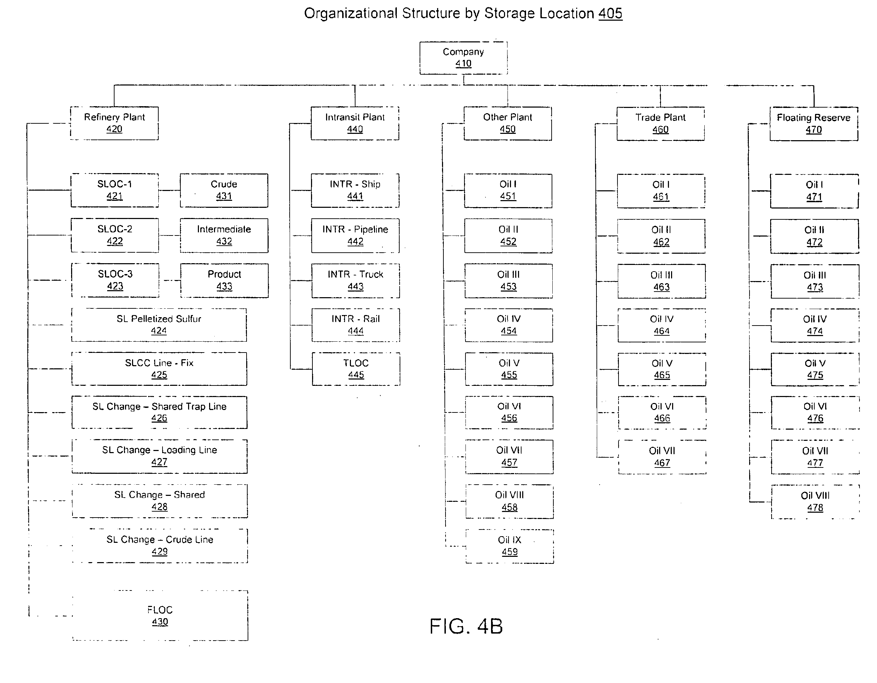

The transfer of materials through an oil refinery can be represented in an alternative fashion, through an organizational structure by storage location 405, as illustrated in figure 4B, using virtual locations. The organizational structure includes a general virtual location for the company 410, and general virtual locations for plants in the company identified in figure 4B as virtual locations for a refinery plant 420, an intransit plant 440, a other plant 450, a trade plant 460 and a floating reserve 470. The refinery plant 420 includes subsidiary virtual locations for the smallest location (SLOC-1) 421 for crude 431, the smallest location (SLOC-2) for intermediate 432, the smallest location (SLOC-3) for product 433, a smallest location (SL) for pelletized sulfur 424, an SLCC line fix location 425, a smallest location (SL) for the change in a shared trap line 426, a smallest location (SL) for the change in a loading line 427, a smallest location (SL) for the change in a shared 428, and a smallest location (SL) for the change in a crude line 429. These are all virtual locations associated with the refinery plant 420, which also has an associated virtual location for the financial data associated with materials. This is stored in a financial storage location (FLOC) 430.

The intransit plant 440 has subsidiary locations that are valuated virtual locations including virtual locations for intransit (INTR) ship 441, intransit (INTR) pipeline 442, intransit (INTR) truck 443, intransit (INTR) rail 444, and intransit temporary location (TLOC) 445. The other plant 450 has subsidiary locations that are valuated virtual locations including virtual locations 451 through 459 for brand oils, Oil I through Oil IX, respectively. The trade plant 460 has subsidiary locations that are valuated virtual locations including virtual locations 461 through 467 for brand oils, Oil I through Oil VII, respectively. The floating reserve 470 has subsidiary locations that are valuated virtual locations including virtual locations 471 through 478 for brand oils, Oil I through Oil VIII, respectively.

3. Examples of Data Processing Performed by CFP System 100

The CFP system 100 performs monitoring, evaluation and synchronization for data related to product costing and inventory valuations at the conversion facility 101. These data inputs regarding product costing and inventory valuation enable the CFP system 100 to perform current month cost of goods manufactured calculations and reporting. In addition, the CFP system 100 can also perform monitoring, evaluation and synchronization for mass balances at the conversion facility 101.

The mass balancing data input can improve reporting regarding the accuracy of the current month information, such as the cost of goods manufactured calculation by incorporating mass balance data into the work-in-process inventory valuations used in the cost of goods manufactured calculation. The mass balance data provided through the CFP system 100 can be used for other purposes by the ERP system 208 or the BI system 210 of the corporation.

According to other embodiments, the CFP system 100 can be used for costing operations to provide data updates to an ERP system 104 so that the ERP system can provide more accurate estimations of product costs. These costing operations can include, but are not limited to, synchronizing the production from a refinery and crediting a production cost from internal orders to inventory; calculating a weight average of an opening batch with a production batch, synchronizing material to material transfers to or from crude slop, feedstock, and finished product, reviewing the finished goods (FG) cost posted in the ERP system 104, reviewing a physical inventory count, reviewing the correctness of a turn tank value, reviewing the correctness of a FG cost used for slop, performing settlements on materials in batches and adjusting a cost of goods sold (COGS) cost based on the settlements, merging a production batch with a selling batch, performing the setup unit costing for a selling batch, possibly in advance for 2 months, and merging a batch value for multiple batches into one batch to obtain a weighted-average.

The CFP system 100 may also be utilized for calculating and tracking changes in mass balances, also known as material balancing, at any processing subunit unit within a conversion facility. Mass balancing relies on the physical law principles relating to conservation of mass, which requires that what goes into a system must either come out of the system somewhere else, be consumed or generated by the system, or remain in the system and accumulate. The relationship between these principles can be restated as: a) the streams entering a system cause an increase of a substance (mass, energy, momentum, etc.) in the system; b) the streams leaving the system decrease the amount of the substance in the system; c) generating or consuming mechanisms (such as chemical reactions) can either increase or decrease the amount of a substance in the system; and d) any part of a substance not leaving or consumed remains in a system.

In a system that includes no reaction, these principles can be reduced to the following equation:

$$\text{input mass} = (\text{output mass} + \text{accumulation}).$$

In a system that includes a reaction, modifiers must be introduced to account for substances generated or consumed by the reaction. So the modified equation for mass balancing in a reactive system is:

$$(\text{input mass} + \text{generation}) =$$

$$(\text{output mass} + \text{accumulation} + \text{consumption}).$$

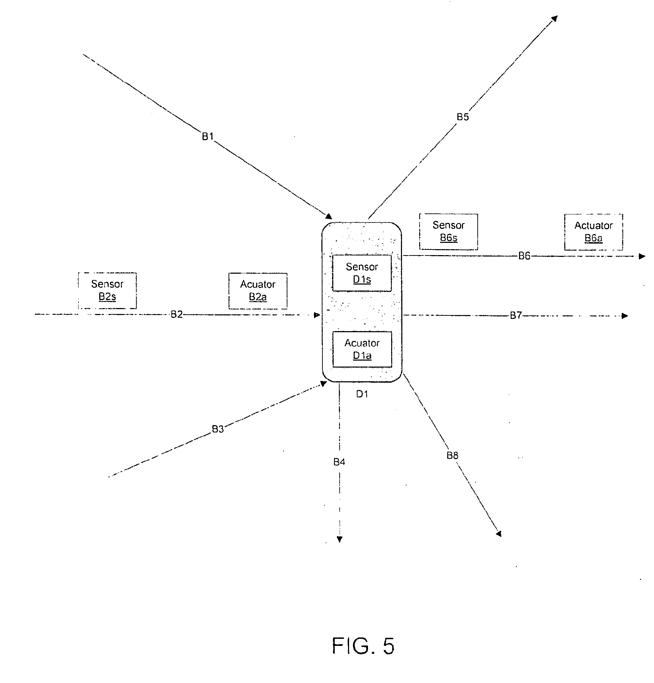

These principles can be applied through an analysis of the distillation unit shown in Figure 5. Figure 5 shows distillation unit D1 (also shown in Figure 4). D1 has input feeds B1, B2 and B3 and output feeds B4, B5. B6, B7 and B8. If no chemical reaction is occurring in D1, then no accumulation may occur in D1 so long as the combined mass output through B4, B5. B6, B7 and B8 is greater than or equal to the combined mass input from B1, B2 and B3.

As part of an ongoing process of monitoring and evaluating operations and production at a conversion facility, the CFP system 100 may repeatedly measure the volume of material passing into D1 through B1, B2 and B3, the volume of material passing out of D1 through B4, B5, B6, B7 and B8. This is accomplished by having at least one sensor attached to each line with at least one actuator for controlling the convective flow through each individual line.

In figure 5, line B2 has exemplary sensor B2s for measuring convective flow of material through B2 and exemplary actuator B2a which is an actuator controlling flow through B2 into distillation unit D1. Distillation unit D1 has exemplary sensor D1 s that can monitor such things as the volume or temperature in the distillation unit D1. Exemplary actuator D1 a can control such things as the convective flow of material into or out of the unit D1, or some other condition associated with D1. Finally, line B6 has exemplary sensor B6s for measuring convective flow of material through line B6 and exemplary actuator B6a which is an actuator controlling flow through B6 into another line or another processing subunit.

Using the sensors such as B2s, D1s and B6s, a CFP system may simultaneously measure the volume and nature of the material held or processed in distillation unit D1. The measured volumes can be associated with cost of the materials in D1 and of those passing through each line. All these flows may be tracked from the point of intake at the conversion facility or from a beginning inventory at the conversion facility, and adding such things as indirect processing costs that is associated with the materials passing out of D1 through B4, B5, B6, B7 and B8.

All this information can be incorporated into the valuation done by a CFP system 100 for all the work-in- process inventories at the conversion facility shown in figure 4. This modified work- in-process valuation can be used in the cost of goods manufactured calculated by a CFP system at any given measuring point in time. This data can be synchronized with other data generated through CFP system.

Mass balancing data and calculations have many uses beyond the calculation for cost of goods manufactured. An ERP system may have routines for tracking production and operations at a conversion facility. For instance, typical data collected within an oil refinery for this purpose can include data for ERP synchronization routines for such things as: quantity conversion routines for crude; quantity conversion routines for finished products, intermediates, and feedstocks; quantity conversion routines for asphalt; quantity conversion routines for LPG; quantity conversion routines for PGP; quantity conversion routines for feedstock; quantity conversion routines for feedstock (H2, N2, NG); routines for crude composition and movement management (CCMM); mass balance reports; hydrocarbon inventory reports for finance; and hydrocarbon purchasing detailed reports for finance.

The cost of goods manufactured, in even a very basic conversion facility, includes input data from multiple direct data 105 and indirect data 106 sources. The calculation may be used as a gauge of manufacturing costs and profitability at a conversion facility. The cost of goods manufactured calculation includes collecting data from sources related, directly or indirectly, to the operations and production of a conversion facility. These sources can provide data regarding such things as direct materials used, beginning raw materials inventory, cost of raw materials purchased, total raw materials available, ending raw materials inventory, total raw materials used. Other direct sources include direct labor and direct manufacturing overhead, beginning work-in-process inventory and ending work-in-process inventory. Sources for indirect data can include indirect materials, indirect labor, depreciation associated with factory buildings and equipment, insurance, and property taxes.

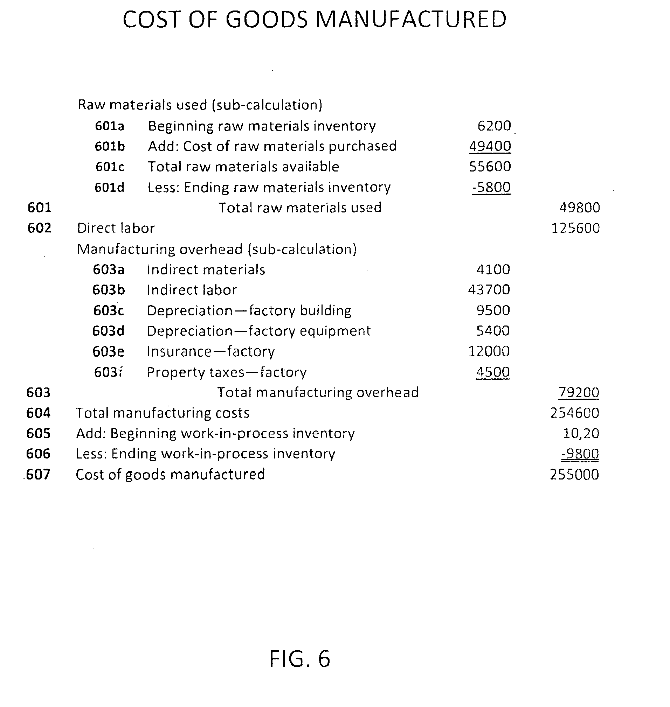

Figure 6 demonstrates an example of a cost of goods manufactured calculation for an exemplary current month using input data within a syncing frame of one week. In the calculation as shown for the cost of goods manufactured 607, direct materials 601 is first obtained by adding beginning raw materials inventory 601 a to cost of raw materials purchased 601 b to obtain total raw materials available 601 c. The ending raw materials inventory 601 d is subtracted to obtain total raw materials used 601 within the syncing frame of, for instance, a single week.

Manufacturing overhead 603 is obtained by adding together indirect materials 603a, indirect labor 603b, depreciation for factory buildings 603c, depreciation for factory equipment 603d, insurance for factory 603e and property taxes for factory 603f. The sum total is total manufacturing overhead 603.

The cost of goods manufactured 607 is then obtained by adding the costs for total direct materials 601, direct labor 602, manufacturing overhead 603 to calculate total manufacturing costs 604. Beginning work-in-process inventory 605 is then added and ending work in process inventory 606 is subtracted to obtain the cost of goods manufactured 607.

In a company having an industrial conversion facility, such as an oil refinery, the difficulty in obtaining accurate and timely cost of goods manufactured information within a current month is particularly challenging given that the manufacturing process in an oil refinery can include elaborate chemical engineering steps including a multiplicity of intermediate mass and energy balancing steps at every phase of processing associated with each quantity of every individual finished good commodity.

Information relating to the cost of goods manufactured is used for assessing efficiency, capacity and performance of a conversion facility as a production unit. The cost of goods manufactured is also an integral part of assessing cost of goods sold, a figure used in the financial statements of a corporation, because the cost of goods sold calculation incorporates the cost of goods manufactured information along with other corporate information, such as operations and inventory not directly associated with the conversion facility.

4. Methods

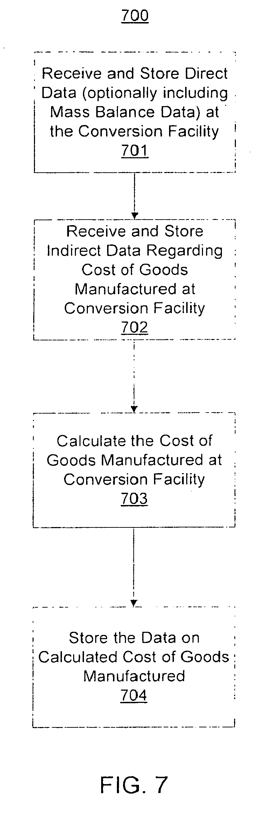

Figures 7, 8 and 9 illustrate methods 700, 800 and 900 for storing data, according to an embodiment. The methods 700, 800 and 900 are described with respect to a CFP system, such as CFP system 100shown in Figure 1 by way of example and not limitation. These methods may be performed in other systems.

Referring to Figure 7, at step 701 data relating to inventory valuations or other direct costs associated with a conversion facility, as described above, is collected and stored. This includes data regarding beginning inventories for raw material commodities, work-in-process inventories and inventories for the finished good commodities. Optionally, this may also include mass balancing data as this may also relate to the valuation of the work-in-process inventories. Data may also be collected relating to only some or for all of the commodities associated with the operations and production at the conversion facility.

At step 702, data relating to indirect costs, as described above which may be associated with the cost of goods manufactured at the conversion facility is received and stored.

At step 703, a cost of goods manufactured at the conversion facility 101 is calculated and at step 704 the calculated value for the cost of goods manufactured is then stored.

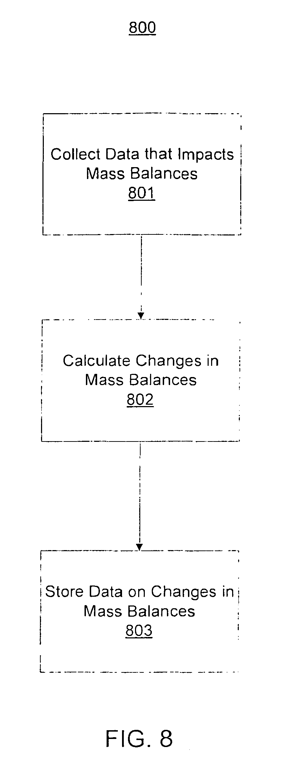

Referring to Figure 8, at step 801 data relating to mass balances within a conversion facility, as described above, is collected and stored. Data may be collected relating to only some or for all of the production units within the conversion facility. Data may be collected relating to only some or for all of the commodities associated with the operations and production at the conversion facility.

At step 802, the changes in mass balances within the conversion facility are calculated and at step 803 the data relating to calculated values for the changes to mass balances at the conversion facility are then stored.

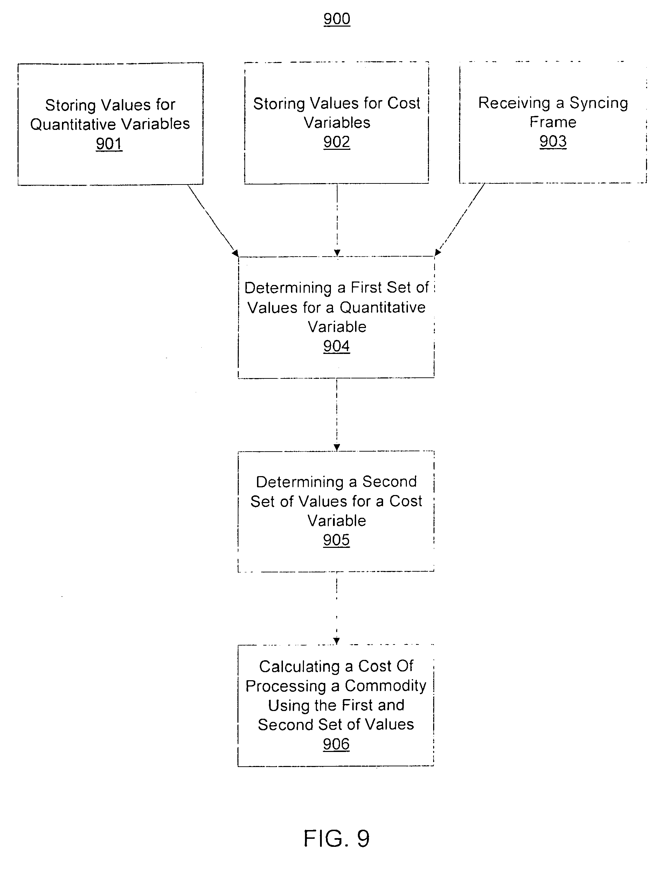

Referring to Figure 9, at step 901 data is stored relating to values for quantitative variables on quantitative aspects of a conversion facility. At step 902, data is stored relating to values for quantitative variables on quantitative aspects of a conversion facility. At step 903, a syncing frame is received and the syncing frame may embrace input data stored less than thirty days prior to receiving the syncing frame.

At step 904, a first set of values for a quantitative variable is determined and at step 905, a second set of values for the cost variable is determined. Finally, at step 906, a cost of processing a commodity is calculated using the first and second set of values.

5. Technical Effects

Technical effects associated with systems and methods associated with a CFP system, such as CFP system 100, include optimized production as well as optimized conversion rates and amounts caused by sensors and actuators. These may be located at points within, or otherwise associated with, a conversion facility. The technical effects include increased/modified production rates or amounts and/or increased/modified conversion efficiencies.

Changes to rates of transfer and/or conversion may be implemented through the actuators associated with the conversion facility. The changes may be implemented based on feedback from collected sensor data, such as data collected within a syncing frame. This may include data collected at any interval, such as hourly, daily or weekly, or collected at a predetermined condition, such as a temperature, a mass transfer rate, a mass amount, etc.. Also, by controlling mass balances, or other measures associated with conversion facility processes, this may optimize efficiency and/or production. Optimization may occur within the context of an intermediate location within a production facility. Optimization may also be occur within a larger context, such with respect to an entire conversion facility. In an even broader context, the optimized production may be associated with a group including multiple conversion facilities, such might be associated with a corporate entity.

Controlling conversion processes using sensors and/or actuators can provide for increased production of intermediate and/or final products. The same can also provide for increased efficiency, decreased waste products, and preservation of any of the resources utilized, such as direct or indirect materials and labor.

6. Computer System For Executing Software

One or more of the steps and functions described herein and one or more of the components of the systems described herein may be implemented as computer code stored on a computer readable storage device, such as memory or another type of storage device. The computer code is executed on a computer system (e.g., the computer system 1000 described below), for example, by a processor, application-specific integrated circuit (ASIC), or other type of circuit. The code may exist as software program(s) comprised of program instructions in source code, object code, executable code or other formats.

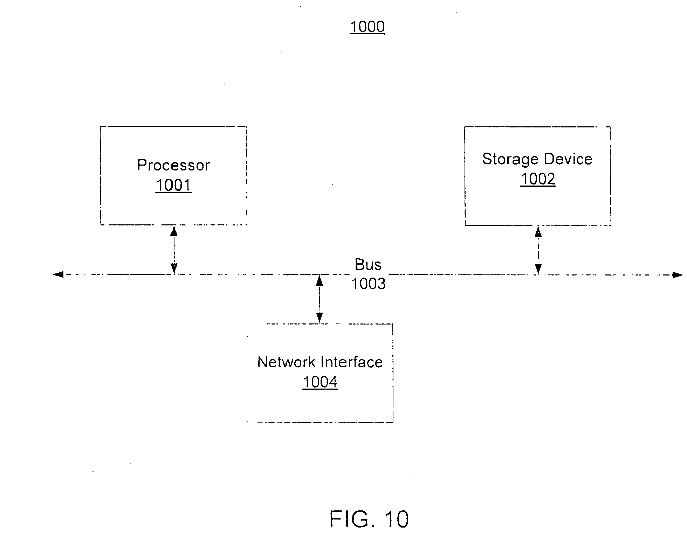

Figure 10 shows a computer system 1000 that may be used as a hardware platform for the CFP system 100. The computer system 1000 may be used as a platform for executing one or more of the steps, methods, and functions described herein that may be embodied as software stored on one or more computer readable storage devices, which are hardware storage devices.

The computer system 1000 includes a processor 1001 or processing circuitry that may implement or execute software instructions performing some or all of the methods, functions and other steps described herein. Commands and data from the processor 1001 are communicated over a communication bus 1003. The computer system 1000 also includes a computer readable storage device 1002, such as random access memory (RAM), where the software and data for processor 1001 may reside during runtime. The storage device 1002 may also include non-volatile data storage. The computer system 1000 may include a network interface 1004 for connecting to a network. It is apparent to one of ordinary skill in the art that other known electronic components may be added or substituted in the computer system 1000.

Furthermore, the system and methods described herein are generally described with respect to monitoring and evaluating a conversion facility for cost and production data. However, the system and methods are applicable to monitoring and evaluating a conversion facility for other types of data.

While the embodiments have been described with reference to examples, those skilled in the art are able to make various modifications to the described embodiments without departing from the scope of the embodiments as described in the following claims, and their equivalents.

**Claims**

1. A system (100) configured to generate conversion facility production data of a conversion facility (200) utilizing quantitative variables, cost variables, and a syncing frame, the system (100) comprising:

   a storage device (1002) storing
   measured values for quantitative variables describing quantitative aspects of the conversion facility (200), wherein the quantitative variables are received from a plurality of sources associated with conversion processes performed at the conversion facility (200),
   determined values for cost variables describing cost aspects of the conversion facility (200), wherein the cost variables are received from a plurality of sources associated with conversion processes performed at the conversion facility (200), and
   the syncing frame, wherein the syncing frame embraces measured values for the quantitative variables and determined values for the cost variables stored less than thirty days prior to receiving the syncing time frame;
   a processor (1001) receiving a request for
   a first set of values, determined from the stored values for the quantitative variables, for at least one of the quantitative variables that are within the syncing frame, and
   a second set of values, determined from the stored values for the cost variables, for at least one of the cost variables that are within the syncing frame; and
   the processor (1001) calculates a cost of processing a commodity processed at the conversion facility (200) for the syncing frame using the first and second set of values.

2. The system (100) of claim 1, wherein one of the processes performed at the conversion facility (200) includes a nonreactive material transfer through a processing subunit, and the quantitative variables include an input mass, an output mass, and an accumulation mass.

3. The system (100) of any one of the preceding claims, wherein the processor (1001) calculates a cost of processing a commodity using:

   a set of values determined for the input mass from the first set of values;
   a set of values determined for the output mass from the first set of values;
   a set of values determined for the accumulation mass from first set of values; and
   the cost of processing the commodity is calculated using the set of values for the input mass, the output mass and the accumulation mass.

4. The system (100) of any one of the preceding claims, wherein one of the processes performed at the conversion facility (200) includes a reactive material transfer through a processing subunit, and the quantitative variables include an input mass, an output mass, an accumulation mass, a generation mass and a consumption mass.

5. The system (100) of claim 4, wherein the processor calculates a cost of processing a commodity using:

a set of values determined for the input mass from the first set of values;

a set of values determined for the output mass from the first set of values;

a set of values determined for the accumulation mass from first set of values;

a set of values determined for the generation mass from the first set of values;

a set of values determined for the consumption mass from the first set of values; and

wherein the cost of processing the commodity is calculated using the set of values for the input mass, the output mass, the accumulation mass, the generation mass and the consumption mass.

6. The system (100) of any one of the preceding claims, wherein at least one of the plurality of sources for the quantitative variables includes a sensor (201) in the conversion facility (200) and the values in the quantitative variables include values measured by the sensor (201).

7. The system (100) of claim 6, wherein the processor (1001) calculates a control amount to vary an actuator 202 associated with the sensor (201) based on the measured values which are within the syncing frame.

8. The system (100) of any one of the preceding claims, wherein the time period for the syncing frame is less than or equal to a week.

9. The system (100) of any one of the preceding claims, wherein the values for the at least one quantitative variable are measured daily or less than daily.

10. The system (100) of any one of the preceding claims, wherein the conversion facility comprises at least one of an oil refinery, coal refinery, natural gas refinery, power generation plant, recycling plant and a food processing plant.

11. A method for monitoring an activity associated with a conversion facility (200), the method comprising:

storing measured values for quantitative variables describing quantitative aspects of the conversion facility, wherein the quantitative variables are received from a plurality of sources associated with conversion processes performed at the conversion facility (200);

storing values for cost variables describing cost aspects of the conversion facility, wherein the cost variables are received from a plurality of sources associated with conversion processes performed at the conversion facility (200);

receiving a syncing frame identifying a time period ending less than thirty days prior to receiving the syncing time frame;

determining, from the stored measured values for the quantitative variables, a first set of values for at least one of the quantitative variables that are within the syncing frame;

determining, from the stored values for the cost variables, a second set of values for at least one of the cost variables that are within the synching frame; and

calculating a cost of processing a commodity processed at the conversion facility (200) during the syncing frame using the first and second set of values.

12. The method of claim 11, wherein one of the processes is a nonreactive material transfer through a processing subunit, and the quantitative variables include an input mass, an output mass, and an accumulation mass.

13. The method of claim 11 or 12, wherein calculating a cost of processing a commodity comprises:

determining values for the input mass from the first set of values;

determining values for the output mass from the first set of values;

determining values for the accumulation mass from first set of values; and

calculating the cost of processing the commodity using the set of values for the input mass, the output mass and the accumulation mass.

14. The method of any one of the preceding claims 11 to 13, wherein one of the processes performed at the conversion facility includes a reactive material transfer through a processing subunit and the quantitative variables include an input mass, an output mass, an accumulation mass, a generation mass and a consumption mass, wherein calculating a cost of processing a commodity comprises:

determining values for the input mass from the first set of values;

determining values for the output mass from the first set of values;
determining values for the accumulation mass from first set of values;
determining values for the generation mass from the first set of values;
determining values for the consumption mass from the first set of values;
calculating the cost of processing the commodity using the set of values for the input mass, the output mass, the accumulation mass, the generation mass and the consumption mass.

15. A computer program product comprising computer-readable instructions which, when loaded and executed on a suitable system, perform the steps of a method for monitoring an activity associated with a conversion facility (200) according to any one of the preceding claims 11 to 14.

Conversion Facility Production (CFP) System
<u>100</u>

FIG. 1

FIG. 2

Raw Materials
301

Work in Process
302

Finished Goods
303

FIG. 3

FIG. 4A

Organizational Structure by Storage Location 405

Company
410

**Refinery Plant 420**

| SLOC-1 421 | Crude 431 |
| SLOC-2 422 | Intermediate 432 |
| SLOC-3 423 | Product 433 |

SL Pelletized Sulfur 424

SLCC Line - Fix 425

SL Change – Shared Trap Line 426

SL Change – Loading Line 427

SL Change – Shared 428

SL Change – Crude Line 429

FLOC 430

**Intransit Plant 440**

INTR - Ship 441

INTR - Pipeline 442

INTR - Truck 443

INTR - Rail 444

TLOC 445

**Other Plant 450**

Oil I 451

Oil II 452

Oil III 453

Oil IV 454

Oil V 455

Oil VI 456

Oil VII 457

Oil VIII 458

Oil IX 459

**Trade Plant 460**

Oil I 461

Oil II 462

Oil III 463

Oil IV 464

Oil V 465

Oil VI 466

Oil VII 467

**Floating Reserve 470**

Oil I 471

Oil II 472

Oil III 473

Oil IV 474

Oil V 475

Oil VI 476

Oil VII 477

Oil VIII 478

FIG. 4B

EP 2 413 281 A1

Sensor
B6s

Actuator
B6a

Sensor
B2s

Acuator
B2a

Sensor
D1s

Acuator
D1a

B1

B5

B2

B6

B7

B3

B4

B8

D1

FIG. 5

# COST OF GOODS MANUFACTURED

Raw materials used (sub-calculation)

| | | | | |
|---|---|---|---|---|
| | 601a | Beginning raw materials inventory | 6200 | |
| | 601b | Add: Cost of raw materials purchased | 49400 | |
| | 601c | Total raw materials available | 55600 | |
| | 601d | Less: Ending raw materials inventory | -5800 | |
| 601 | | Total raw materials used | | 49800 |
| 602 | Direct labor | | | 125600 |
| | Manufacturing overhead (sub-calculation) | | | |
| | 603a | Indirect materials | 4100 | |
| | 603b | Indirect labor | 43700 | |
| | 603c | Depreciation—factory building | 9500 | |
| | 603d | Depreciation—factory equipment | 5400 | |
| | 603e | Insurance—factory | 12000 | |
| | 603f | Property taxes—factory | 4500 | |
| 603 | | Total manufacturing overhead | | 79200 |
| 604 | Total manufacturing costs | | | 254600 |
| 605 | Add: Beginning work-in-process inventory | | | 10,20 |
| 606 | Less: Ending work-in-process inventory | | | -9800 |
| 607 | Cost of goods manufactured | | | 255000 |

# FIG. 6

700

Receive and Store Direct
Data (optionally including
Mass Balance Data) at
the Conversion Facility
701

Receive and Store
Indirect Data Regarding
Cost of Goods
Manufactured at
Conversion Facility
702

Calculate the Cost of
Goods Manufactured at
Conversion Facility
703

Store the Data on
Calculated Cost of Goods
Manufactured
704

FIG. 7

800

Collect Data that Impacts
Mass Balances
801

Calculate Changes in
Mass Balances
802

Store Data on Changes in
Mass Balances
803

FIG. 8

900

```
┌──────────────────┐   ┌──────────────────┐   ┌──────────────────┐
│                  │   │                  │   │                  │
│  Storing Values for │ │ Storing Values for Cost │ │ Receiving a Syncing │
│ Quantitative Variables │ │    Variables     │ │     Frame        │
│       901        │   │      902         │   │      903         │
│                  │   │                  │   │                  │
└──────────────────┘   └──────────────────┘   └──────────────────┘
```

Determining a First Set of
Values for a Quantitative
Variable
904

Determining a Second
Set of Values for a Cost
Variable
905

Calculating a Cost Of
Processing a Commodity
Using the First and
Second Set of Values
906

FIG. 9

1000

Storage Device
1002

Processor
1001

Bus
1003

Network Interface
1004

FIG. 10

**EUROPEAN SEARCH REPORT**

Application Number

EP 11 00 6178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/012464 A2 (SIEMENS AG [DE]; SIEMENS CORP RES INC [US]; ALTHEN SEBASTIAN [DE]; BAR) 10 February 2005 (2005-02-10) * the whole document * ----- | 1-15 | INV. G06Q50/00 |
| X | WO 2010/053221 A1 (SOLIDEO SYSTEMS CO LTD [KR]; KANG JOO SEOK [KR]; KIM SOOK HEE [KR]) 14 May 2010 (2010-05-14) * the whole document * ----- | 1-15 | |
| X | US 2007/162170 A1 (NAKAMURA MASAHIRO [JP]) 12 July 2007 (2007-07-12) * the whole document * ----- | 1-15 | |

TECHNICAL FIELDS SEARCHED (IPC)

G06Q

The present search report has been drawn up for all claims

| Place of search | Date of completion of the search | Examiner |
|---|---|---|
| Munich | 20 October 2011 | Pastore, Edoardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 6178

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2011

| Patent document cited in search report | Publication date | Patent family member(s) | Publication date |
|---|---|---|---|
| WO 2005012464 A2 | 10-02-2005 | AU 2004261963 A1<br>BR PI0413003 A<br>EP 1648981 A2 | 10-02-2005<br>26-09-2006<br>26-04-2006 |
| WO 2010053221 A1 | 14-05-2010 | CN 102209973 A<br>KR 20100051424 A<br>US 2011208777 A1 | 05-10-2011<br>17-05-2010<br>25-08-2011 |
| US 2007162170 A1 | 12-07-2007 | JP 4675046 B2<br>JP 2005215979 A<br>WO 2005073870 A1 | 20-04-2011<br>11-08-2005<br>11-08-2005 |

For more details about this annex : see Official Journal of the European Patent Office, No. 12/82